# EUROPÄISCHE PATENTANMELDUNG

(11) **EP 4 424 439 A1**
(43) Veröffentlichungstag der Anmeldung: **04.09.2024**
(21) Anmeldenummer: 23159120.7
(22) Anmeldetag: 28.02.2023
(51) Int. Cl.: B22F 1/10, B22F 7/06, B22F 10/10, B22F 12/86, B33Y 10/00, B33Y 80/00, H01F 1/22, H01F 1/16, H01F 1/28, H01F 3/02, B22F 1/16, B22F 3/02, B22F 3/10

(54) **VERFAHREN ZUR HERSTELLUNG EINES BLECHPAKETS FÜR EINE ELEKTRISCHE MASCHINE**

(71) Anmelder: Siemens Aktiengesellschaft, 80333 München (DE)
(72) Erfinder: Denneler, Stefan, 81371 München (DE); Schuh, Carsten, 85598 Baldham (DE); Soller, Thomas, 94469 Deggendorf (DE); Vollmer, Rolf, 36129 Gersfeld (DE)
(74) Vertreter: Siemens Patent Attorneys

(57) **Zusammenfassung**

Die Erfindung betrifft ein Verfahren zur Herstellung eines Blechpaketes (2) einer elektrischen Maschine (4), umfassend folgende Schritte,
a) Herstellen einer viskosen Masse (6) durch Vermischen mindestens eines anorganischen Pulvers (26) mit mindestens einem organischen Bindemittel (28) und einem flüssigen Trägermittel (30),
b) flächiges Verteilen der viskosen Masse auf eine Dicke von weniger als 0,5 mm,
c) Ausbilden eines flächigen Grünkörpers (8) durch zumindest teilweises Entfernen des flüssigen Trägermittels mittels eines Trocknungsprozesses,
d) Durchführen eines Strukturierungsprozesses (12) zur Vereinzelung von Magnetblech-Grünkörpern (14) aus dem flächigen Grünkörper (8), wobei Grünkörperreste (24) zurückbleiben,
e) Entfernen des mindestens einen organischen Bindemittels aus dem Grünkörper,
f) Sintern des entbinderten Grünkörpers (18) zu einem Magnetblech (22),
g) Stapeln einer Vielzahl von Magnetblechen (22) zu einem Blechpaket (2),
h) Pulverisieren des Grünkörperrestes (24) und Versetzen des pulverisierten Grünkörperrestes (24) mit dem flüssigen Trägermittel (30) und
i) Wiederholen der Schritte a bis g mit der so redispergierten viskosen Masse (6).

## Beschreibung

Die Erfindung betrifft ein Verfahren zur Herstellung eines Blechpaketes für eine elektrische Maschine nach dem Patentanspruch 1.

In herkömmlichen elektrischen Maschinen weist der Stator oder auch der Rotor ein Blechpaket auf, um den elektrische Leiter gewickelt sind. Dieses Blechpaket besteht aus einer Vielzahl einzelner Magnetbleche, die übereinander gestapelt sind. In den allermeisten Fällen werden diese Blechpakete aus einem sogenannten Coil, das aus dem gewünschten Material, beispielweise einer weichmagnetischen Eisenlegierung besteht, herausgestanzt. Aus motortechnischen Gründen ist es zur Erreichung einer möglichst hohen Leistungsdichte zweckmäßig, die einzelnen Magnetbleche des Magnetblechstapels oder des Blechpaketes möglichst dünn zu gestalten. Die aus einer Folie oder einem Coil ausgestanzten Magnetbleche erreichen mit herkömmlichen technischen Mitteln eine Dicke, die nicht geringer als 200 µm bis 300 µm ist. Aus diesem Grund ist man in letzter Zeit dazu übergegangen, durch ein Schablonendruckverfahren, das auch ein Siebdruckverfahren einschließt, Magnetbleche möglichst endkonturnah in einem Grünzustand zu drucken. Ein Beispiel für diese Technologie zur Herstellung von Magnetblechstapeln mit endkonturnahem Siebdruck ist in der EP 4060882A1 gegeben. Ein weiteres Beispiel für diese Siebdrucktechnologie ist in der EP 3595148B1 dargestellt.

Bei der Herstellung von herkömmlichen Magnetblechen durch Ausstanzen dieser aus einem fortlaufenden Coil entsteht eine sehr große Menge von Abfall, die grundsätzlich im Hochofen als Eisenwerkstoff wiederverwertet werden kann, aber der Herstellungsprozess für ein neues Herstellen von entsprechenden Hochleistungsmaterialien ist extrem teuer. Ferner ist durch diese Technologie kaum oder nur sehr begrenzt die entsprechende Schichtdicke für Motoren mit einer hohen Leistungsdichte zu erreichen. Das Drucken von Magnetblechen mittels Schablonen ist für eine große Endfertigung nur mit einem sehr hohen Investitionsaufwand der Fertigungsanlagen zu erzielen.

Die Aufgabe der Erfindung besteht darin, ein Verfahren zur Herstellung eines Magnetbleches für einen Motor mit einer gegenüber dem Stand der Technik höheren Leistungsdichte bereitzustellen, der großtechnisch gegenüber den bekannten Verfahren mit einem geringeren Aufwand an Fertigungsanlagen darstellbar ist.

Die Lösung der Aufgabe besteht in einem Verfahren mit den Merkmalen des Patentanspruchs 1.

Das Verfahren zur Herstellung eines Blechpaketes einer elektrischen Maschine nach Patentanspruch 1 umfasst dabei folgende Schritte:
a) Herstellen einer viskosen Masse durch Vermischen mindestens eines anorganischen Pulvers mit mindestens einem, bevorzugt organischen Bindemittel und einem flüssigen Trägermittel.
b) Flächiges Verteilen der viskosen Masse auf eine Dicke von weniger als 0,5 mm,
c) Ausbilden eines flächigen Grünkörpers durch zumindest teilweises Entfernen des flüssigen Trägermittels mittels eines Trocknungsprozesses,
d) Durchführen eines Strukturierungsprozesses zur Vereinzelung von Magnetblech-Grünkörpern aus dem flächigen Grünkörper, wobei Grünkörperreste zurückbleiben,
e) Entfernen des mindestens einen organischen Bindemittels aus dem Grünkörper,
f) Sintern des entbinderten Grünkörpers zu einem Magnetblech,
g) Stapeln einer Vielzahl von Magnetblechen zu einem Magnetblech,
h) Pulverisieren (worunter ein wesentliches Zerkleinern zu verstehen ist) des Grünkörperrestes und Versetzen des pulverisierten Grünkörperrestes mit dem flüssigen Trägermittel und
i) Wiederholen der Schritte a) bis g) mit der so dispergierten viskosen Masse.

Die im Patentanspruch 1 und in den fortfolgenden Patentansprüchen verwendeten technologischen Begriffe seien dabei wie folgt definiert:
Viskose Masse: Je nach Höhe der Viskosität, also der Zähigkeit der Masse, wird diese im technischen Umfeld eher als Paste (hohe Viskosität) oder als Schlicker (niedrigere Viskosität) bezeichnet. Die Viskosität der Masse ist in der Regel von äußeren Einflüssen abhängig. Dazu gehören zum einen die Temperatur, wobei mit höherer Temperatur die Viskosität sinkt. Zum anderen lässt sich die Viskosität durch das Einbringen von Scherspannungen (beispielsweise mittels eines Rührers oder eines Rakels) verändern. Erniedrigt sich die Viskosität (insbesondere temporär) durch das Einbringen von Scherspannungen, nennt man dieses Verhalten ein thixotropes Verhalten (im umgekehrten Fall sprich man von Rheopexie). Der Paste werden bevorzugt die Thixotropie fördernde Zusatzstoffe, wie zum Beispiel Stellmittel oder Verdicker, zugefügt.

Die Masse enthält in ihrer Grundzusammensetzung ein anorganisches Pulver. Das Pulver ist bevorzugt ein Metallpulver, das Eisen oder eine Eisenlegierung umfasst, wobei die Eisenlegierung bevorzugt weichmagnetische Eigenschaften aufweist. Weichmagnetische Stoffe lassen sich in einem Magnetfeld leicht magnetisieren und auch umpolarisieren. Die viskose Masse umfasst im Weiteren ein flüssiges Trägermittel, wie z. B. Wasser, Alkohole (z.B. Terpineole oder Glycerin), Ether, Ester, Ketone, Amine, Amide, allgemein Kohlenwasserstoffe [z.B. Pentan/Hexan/Heptan, Benzol-Derivate] sowie Kombinationen hiervon. Das Pulver liegt in diesem flüssigen Trägermittel dispergiert vor. Ferner enthält die Masse mindestens ein organisches Bindemittel wie z.B. Zellulosen, Polyvinylalkohole / -acetale (PVA oder PVB), Acrylatdispersionen. Dieses organische Bindemittel (oder gegebenenfalls mehrere Bindemittel) trägt zum einen zur Beeinflussung der rheologischen Eigenschaften der viskosen Masse bei, zum anderen dient es zur Verfestigung eines Grünkörpers, wie man ein Gebilde nach der Formgebung der viskosen Masse und der daran anschließenden Trocknung bezeichnet.

Ein Grünkörper ist in diesem Zusammenhang zunächst der Körper, den die viskose Masse nach ihrer flächigen Formgebung und nach einem zumindest teilweisen Entfernen des flüssigen Trägermittels bildet. Das Entfernen des flüssigen Trägermittels führt zu einer mechanischen Stabilisierung der Masse (die nun nicht mehr viskos ist), so dass sie nun mechanisch handhabbar und bearbeitbar ist. Der Grünkörper enthält in diesem Zustand noch das oder die organischen Bindemittel, die bevorzugt thermisch, gegebenenfalls auch chemisch, entfernt werden müssen. Dies bezeichnet man als Entbindern und man spricht nach dem Entbindern von einem entbinderten Grünkörper.

Der entbinderte Grünkörper wird einem Sinterprozess unterzogen. Durch die Wärmebehandlung in Form eines Sinterprozesses, bei dem anders als bei einem Schmelzvorgang einzelne Körner im Grünkörper durch Diffusionsprozesse eine zusammenhängende, stofflich verbundene Struktur bilden, wird der Grünkörper in einen Sinterkörper überführt. Obwohl bei dem Sinterprozess Diffusionsprozesse überwiegen, können dennoch lokale Schmelzphasen auftreten.

Die viskose Masse wird in eine flächige Form gebracht, die somit auch der flächige Grünkörper aufweist. Unter flächig wird hierbei ein Gebilde verstanden, das plattenförmig ausgestaltet ist und bei dem die Dicke wesentlich geringer ist als seine Erstreckung in einer Flächenebene. Die Flächenstruktur kann dabei beliebig sein, eine bandförmige Struktur bietet sich herstellungstechnisch an. Die Oberfläche ist dabei ebenfalls eben, die Dickenunterschiede oder die Oberflächenrauigkeit sind dabei so groß, wie dies das angewendete technische Formgebungsverfahren im Rahmen der Prozessgenauigkeit zulässt.

Für den Herstellungsprozess des flächigen Grünkörpers können unterschiedliche technische Verfahren herangezogen werden. Dazu gehören Schlickergießen, Tape Casting oder Schablonendruck, wobei die Aufbringungstechnik von der Viskosität der viskosen Masse abhängig ist.

Aus dem flächigen Grünkörper wird mittels eines Strukturierungsprozesses ein Magnetblech-Grünkörper herausgetrennt, also vereinzelt. Für den Strukturierungsprozess können unterschiedliche technische Verfahren herangezogen werden. Dazu gehören Stanzen, Drücken, Schneiden mittels Klingen oder Laser.

Der Vorteil des beschriebenen Verfahrens gegenüber dem erwähnten Stand der Technik besteht darin, dass einerseits gegenüber dem herkömmlichen und allseits verbreiteten Ausstanzen von Blechen aus einem Blech-Coil eine wesentlich geringere Dicke der Magnetbleche realisiert werden kann, was für die Leistungsdichte des Motors von erheblicher Bedeutung ist. Außerdem müssen nicht große Mengen an wertvollem, hoch aufbereitetem Material, das ausgestanzt wird, weggeworfen werden bzw. zu ganz normalem Stahl recycelt werden. Vielmehr kann der bei dem beschriebenen Verfahren durch die Strukturierung entstandene Grünkörperrest in technisch ausgesprochen unaufwändiger Weise wieder in die neue viskose Masse integriert werden. Im Gegenzug unterscheidet sich das beschriebene Verfahren von dem alternativen Herstellungsprozess, nämlich dem endkonturnahen Schablonendruckverfahren, insbesondere darin, dass ebenfalls ein endkonturnaher Prozess durchgeführt wird, der jedoch ein kontinuierlicher Prozess ist. Somit kann das Problem des technisch sehr aufwändigen Handlings von frisch gedruckten Grünkörpern vermieden werden. Somit ist gegenüber dem Siebdruck- bzw. Schablonendruckverfahren eine wesentlich bessere großtechnische Produktion mit geringerem Investitionsaufwand an Herstellungsmaschinen möglich. Auch während des Produktionsprozesses ist ein geringerer technischer Aufwand bei geringerem Ausschussrisiko nötig.

In einer Ausgestaltungsform der Erfindung umfasst das anorganische Pulver Eisen oder eine Eisenlegierung, die wiederum bevorzugt weichmagnetische Eigenschaften aufweist. Durch dies Maßnahme kann mittels kostengünstiger und gut verfügbarer Werkstoffe eine magnetisch vorteilhafte Wirkung für das Blechpaket erzielt werden.

Die über Lasergranulometrie ermittelte Partikelgröße des Pulvers d₉₅ ist dabei bevorzugt geringer als 100 µm, sodass eine Schicht erzielt werden kann, die bevorzugt geringer als 300 µm, besonders bevorzugt weniger als 200 µm Dicke beträgt. Üblicherweise weisen die Partikel des Pulvers einen d₅₀-Wert auf, der geringer als 50 µm ist. Diese geringen Schichtdicken des daraus entstehenden Magnetbleches haben wie beschrieben technische Vorteile bei der Leistungsdichte der elektrischen Maschine, bevorzugt eines Elektromotors. Insbesondere ist dabei die Schichtdicke des flächigen Grünkörpers jedoch mindestens 20 pm, bevorzugt mindestens 50 µm. Somit stellt sich eine besonders bevorzugte Schichtdicke zwischen 50 µm und 200 µm ein.

Verfahrenstechnisch besonders vorteilhaft ist es, wenn das Entbindern des Grünkörpers, also das thermische Entfernen der Bindemittel, und das Sintern des Grünkörpers in einem integrierten thermischen Prozess erfolgt. Hierbei kann beispielweise und in vorteilhafter Weise ein Tunnelofen zur Anwendung kommen, bei dem durch ein Förderband bewegt die Grünkörper zunächst einen Temperaturbereich, der zur Entbinderung geeignet ist, durchlaufen und im weiteren Verlauf des Tunnelofens die Temperatur auf eine Sintertemperatur ansteigt.

Des Weiteren ist es zweckmäßig, dass ein Formveränderungsfaktor zwischen dem Magnetblech-Grünkörper und dem Magnetblech ermittelt wird, und der Strukturierungsprozess so eingestellt wird, dass sich der Magnetblech-Grünkörper um den Strukturierungsfaktor von einem festgelegten Endmaß des Magnetbleches unterscheidet. Das heißt, bezüglich einer technischen Beschreibung braucht das Magnetblech eine fest definierte und festgelegte Kontur. Da es beim Sinterprozess zu einer Konturveränderung des Magnetblechs, in der Regel zu einer Schwindung kommt, wird die zu erwartende Schwindung durch den Formveränderungsfaktor bei der Strukturierung des Magnetblech-Grünkörpers mit einberechnet. Auf diese Weise ist eine endkonturnahe Fertigung des Magnetblechs möglich. Im Idealfall muss das fertige Magnetblech bzw. das gestapelte Blechpaket nicht mehr oder nur geringfügig nachbearbeitet werden.

In einer weiteren vorteilhaften Ausgestaltungsform der Erfindung erfolgt das flächige Verteilen der viskosen Massen mittels eines Schlickergussverfahrens, eines Tape-Casting-Verfahrens oder eines Schablonendruckverfahrens. Das hier beschriebene Schablonendruckverfahren unterscheidet sich vom Stand der Technik darin, dass es sich um einen kontinuierlichen Prozess handelt, wobei auf eine endkonturnahe Darstellung verzichtet werden kann. Das beschriebene Schablonendruckverfahren, ebenso wie das Schlickergussverfahren und das Tape-Casting-Verfahren sind großtechnische Verfahren zur kontinuierlichen Herstellung von flächigen, folienartigen Grünkörpern. Die unterschiedlichen Bezeichnungen rühren insbesondere von der Viskosität der verwendeten viskosen Masse her und von den daraus resultierenden nötigen Aufbringungsverfahren. Bei dem Druckverfahren hat die viskose Masse eine höhere Viskosität als bei dem Schlickergussverfahren oder dem Tape-Casting-Verfahren, wo die Viskosität niedriger, nahezu flüssig ist.

Der weitere Strukturierungsprozess des flächigen Grünkörpers erfolgt bevorzugt und in einfacher Weise mit einem Stanzwerkzeug. Das heißt, es wird ein Stanzverfahren zur Strukturierung angewendet. Unter dem Begriff Stanzen sind auch die Begriffe Schneiden und Drücken (insbesondere das Eindrücken, Einsenken, Einprägen oder Walzprägen) subsumiert. Alternative ebenfalls vorteilhafte Verfahren zur Strukturierung des flächigen Grünkörpers können Ätzen, Wasserstrahlschneiden oder Lasern sein.

Der Strukturierungsprozess ist bevorzugt nach einem Trocknungsprozess des flächigen Grünkörpers angeordnet. Dabei kann die Strukturierung des flächigen Grünkörpers vor dem Entbindern des Grünkörpers erfolgen. Der Grünkörperrest wird, wie beschrieben, wieder der Aufbereitung der viskosen Masse zugeführt. Wenn der Grünkörper vor dem Entbindern strukturiert wird, kann das bereits enthaltene Bindemittel ebenfalls wiederverwertet werden. Sollte das enthaltene Bindemittel bei der Redispergierung des Grünkörperrestes jedoch hinderlich sein, können die Verfahrensschritte d) und e) des beschriebenen Verfahrens in umgekehrter Reihenfolge erfolgen, sodass die Strukturierungsmaßnahmen des Grünkörpers erst nach dem Entbindern erfolgen. Dies kann gegebenenfalls auch vorteilhaft bei der Handhabung des entbinderten Grünkörpers bei der Strukturierung sein.

Ähnliches gilt für das Sintern und das Stapeln des Grünkörpers bzw. des Magnetbleches. Hierbei kann es je nach technischer Ausgestaltung sinnvoll sein, zunächst die vereinzelten Magnetbleche zu sintern und diese dann mit einer höheren Eigenfestigkeit dem Stapelprozess zu unterziehen und zu dem Blechpaket zu stapeln. Ferner kann es aber auch zweckmäßig sein, zunächst die Grünkörper, bevorzugt die entbinderten Magnetblech-Grünkörper, zu einem Blechpaket zu stapeln und diese gemeinsam in einem Sinterofen zu sintern. Insofern können auch die Verfahrensschritte f) und g) des beschriebenen Verfahrens in zweckmäßiger Weise vertauscht werden.

Ferner ist es in diesem Zusammenhang zweckmäßig, dass beim Stapeln zwischen zwei Magnetblechen oder Magnetblech-Grünkörpern eine elektrisch isolierende Schicht angebracht wird. Diese kann beispielsweise eine entsprechend ausgeschnittene Kunststofffolie sein oder es kann durch ein entsprechendes Aufbringungsverfahren, wie beispielsweise einem Sprühverfahren, zwischen jedes Magnetblech oder jeden Magnetblech-Grünkörper eine entsprechende Isolierschicht gesprüht werden.

Des Weiteren ist es zweckmäßig, dass beim Stapeln zwischen zwei Magnetblechen 22 oder Magnetblechgrünkörpern 14 eine Adhäsionsschicht, die man auch als Klebeschicht bezeichnen kann, aufgebracht wird.

In einer weiteren vorteilhaften Ausgestaltungsform der Erfindung erfolgt nach dem Stapeln der Magnetbleche 22 oder Magnetblechgrünkörper 14 eine Verfestigung des Magnetblech-Stapels 2 durch ein Pressen mit einem Druck der größer oder gleich 0,5 MPa und maximal 50 MPa liegt.

Weitere Merkmale und weitere vorteilhafte Ausgestaltungsformen der Erfindung werden anhand der folgenden Figuren näher erläutert. Dabei handelt es sich um schematische Ausgestaltungsformen, die lediglich der Veranschaulichung dienen und keine Einschränkung des Schutzbereichs darstellen. Auch Kombinationen der einzelnen Verfahrensschritte sind möglich und zweckmäßig. Merkmale mit derselben Bezeichnung jedoch in unterschiedlicher Ausgestaltungsform werden dabei mit denselben Bezugszeichen versehen.

Dabei zeigen:
- Figur 1: eine Explosionsdarstellung einer elektrischen Maschine in Form eines Elektromotors,
- Figur 2: ein Blechpaket für einen Rotor,
- Figur 3: eine schematische Darstellung zur Herstellung einer viskosen Masse,
- Figur 4: eine Prozessablaufskizze, die den Ablauf zur Herstellung eines Magnetbleches beschreibt,
- Figur 5: eine Prozessablaufskizze analog Figur 4, die sich darin unterscheidet, dass der Sinterprozess mit gestapelten Magnetblechen erfolgt und
- Figur 6: eine Prozessablaufskizze analog den Figuren 4 und 5, die sich bei der Herstellung eines flächigen Grünkörpers von diesen unterscheidet.

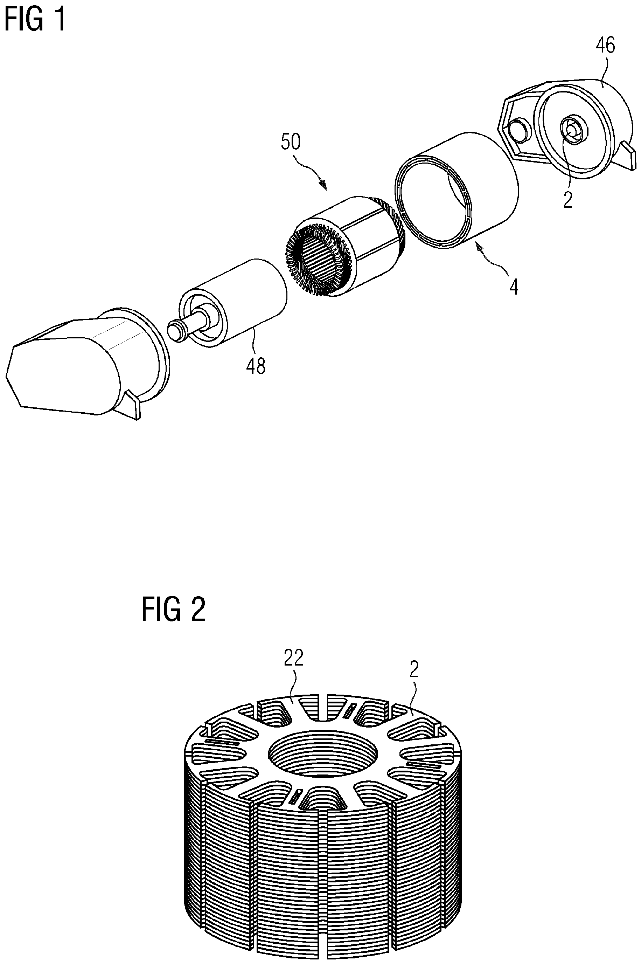

Das beschriebene Verfahren dient zur Herstellung eines Blechpaketes 2 für einen Stator 50 oder einen Rotor 48 einer elektrischen Maschine 4. Eine elektrische Maschine 4 dieser Bauart ist schematisch in Figur 1 als Explosionsdarstellung dargestellt. Neben dem Stator 50 und dem Rotor 48 wird hierbei noch ein Gehäuse 46 dargestellt. Bei der elektrischen Maschine 4 handelt es sich um einen Elektromotor, beispielsweise für die Verwendung in einem Elektrofahrzeug. Grundsätzlich kann die elektrische Maschine 4 jedoch auch als Generator ausgestaltet sein.

Figur 2 zeigt eine vergrößerte Darstellung eines Blechpaketes, das in diesem Fall für den Rotor 48 ausgestaltet ist. In diesem Blechpaket werden anschließend elektrische Wicklungen eingeführt, um die entsprechenden elektrischen Eigenschaften des Rotors 48 zu bewirken. Aus magnetischen Gründen werden derartige Blechpakete 2 eben nicht aus einem monolithischen Material hergestellt, sondern aus einzelnen Magnetblechen 22, die eben zu diesem Blechpaket 2 zusammengestapelt sind. Üblicherweise ist zwischen den einzelnen Magnetblechen 22 eine hier nicht dargestellte Isolierschicht angebracht.

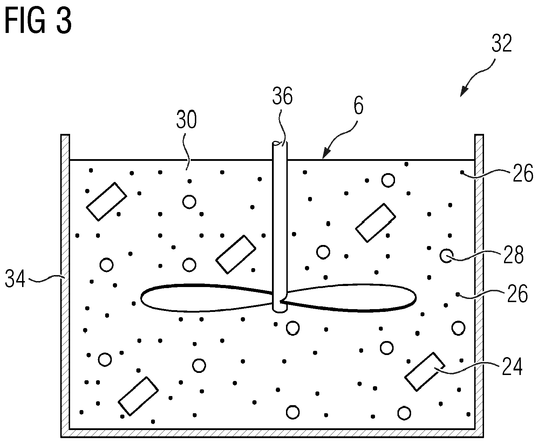

In den Figuren 3 bis 6 wird erläutert, wie ein entsprechendes Magnetblech gemäß Figur 2 mit dem vorteilhaften Verfahren herstellbar ist. Zunächst wird gemäß Figur 3 eine viskose Masse 6 hergestellt, die als zentrale, funktionale Bestandteile ein anorganisches, in der Regel ein metallisches Pulver, hier in Form von 96 %igem Eisen mit weichmagnetischen Eigenschaften, aufweist. Dieses anorganische Pulver 26 wird in einem flüssigen Trägermaterial 30 dispergiert. Dieses flüssige Trägermaterial 30 ist für eine großtechnische Herstellung in kostengünstiger Weise bevorzugt auf Wasserbasis ausgestaltet. Dem flüssigen Trägermaterial 30 können jedoch auch noch weitere funktionale flüssige Bestandteile zugesetzt sein. Diese können ganz oder teilweise Alkohole, Ether, Ester, Ketone, Amine, Amide, Säuren, Laugen oder ganz allgemein Kohlenwasserstoffe wie beispielweise Pentan, Hexan, Heptan oder Benzol-Derivate sein. Die genannten Stoffe können einzeln oder auch als Beimengung oder Mischungen vorliegen und somit das flüssige Trägermittel 30 bilden. Dabei ist auch ein hoher Wasseranteil von 90 % und mehr vorteilhaft, da dies großtechnisch günstig darstellbar ist. Das Eisenpulver hat dabei in dieser Ausgestaltungsform einen d₅₀-Wert von 50 µm. Das bedeutet, dass 50 % der einzelnen Partikel einen kleineren Durchmesser als 50 µm haben. Der maximale Durchmesser sollte nicht mehr als 100 µm sein.

Ferner ist es nötig, der viskosen Masse 6 noch ein Bindemittel, insbesondere ein organisches Bindemittel 28 zuzuführen. Hierbei gibt es eine Auswahl aus einer Vielzahl organischer Bindemittel 28, z.B. Zellulosen, Polyvinylalkohole, Polyvinylacetate (PVA) oder Polyvinylbutyrale (PVB) sowie Acrylatdispersionen. Dieses organische Bindemittel 28 dient zur Verfestigung der anorganischen Partikel in einem Grünzustand nach einem Trocknen und somit nach dem zumindest teilweise Beseitigen des flüssigen Trägermittels 30.

Ein Beispiel für die Zusammensetzung einer viskosen Masse 6 mit einer relativ niedrigen Viskosität um sie als Paste aufzutragen ist wie folgt gegeben:

| **wässrige Siebdruckpaste** | **Beispiel** | **Gewicht / g** | **Gewichts-%** | **Volumen / cm3** | **Volumen %** |
|---|---|---|---|---|---|
| **Pulver** | Reineisen | 4125 | 82,5% | 532,25 | 40,9% |
| **Sinteradditiv** | Fe3P | 121,6 | 2,4% | 18,04 | 1,4% |
| **Träger** | H2O | 480 | 9,6% | 480 | 36,8% |
| **Dispergator** | Disperbyk 190 | 61,8 | 1,2% | 63,06 | 4,8% |
| **Binder** | Tylose | 40,5 | 0,8% | 36,81 | 2,8% |
| **Weichmacher** | Glycerin | 50 | 1,0% | 51,02 | 3,9% |
| **Entschäumer** | Agitan 299 | 24 | 0,5% | 24,48 | 1,9% |
| **Stellmittel** | Lubranil RN2 0 | 85 | 1,7% | 86,73 | 6,7% |
| **Antioxidationsmittel** | | 10 | 0,2% | 10,20 | 0, 8% |
| **Thixotropiemittel** | | 0 | 0, 0% | 0 | 0, 0% |

Eine alternative Zusammensetzung einer viskosen Masse 6 ist wie folgt angegeben:

| **organische Paste** | **Beispiel** | **Gewicht / g** | **Gewichts-%** | **Volumen / cm3** | **Volumen %** |
|---|---|---|---|---|---|
| **Pulver** | Reineisen | 8500 | 85, 0% | 1096,77 | 45,7% |
| **Sinteradditiv** | FePO4 | 286,8 | 2,9% | 99, 93 | 4,2% |
| **Träger** | Terpiniol | 920 | 9,2% | 920 | 38,3% |
| **Dispergator** | KD11 | 80,8 | 0, 8% | 82,44 | 3,4% |
| **Binder** | PVB | 132 | 1,3% | 120 | 5, 0% |
| **Weichmacher** | DOA | 70 | 0,7% | 71,42 | 3, 0% |
| **Entschäumer** | | 0 | 0, 0% | 0 | 0, 0% |
| **Stellmittel** | | 0 | 0, 0% | 0 | 0, 0% |
| **Antioxidationsmittel** | Thixatrol | 10 | 0,1% | 10,20 | 0,4% |

Durch die Variation des Anteils des Trägermittels, in diesem bevorzugten Fall des Wassers und durch die Variation der Zusatzstoffe, wie beispielsweise des Stellmittels oder des Thixotropiemittels kann die Viskosität der viskosen Masse 6 entsprechend der Anforderungen der Auftragungsmethode angepasst werden

Das Eisenpulver enthält Verunreinigungen von Sauerstoff, Kohlenstoff, Stickstoff und Schwefel, wobei die stärkste Verunreinigung Sauerstoff ist, die allerdings höchstens 0,22 Gew. % beträgt Die übrigen Verunreinigungen weisen weniger als 0,02 Gew. % auf. Die Kornverteilung der Eispartikel ist wie folgt angegeben:

| | |
|---|---|
| D10 | 3.71 µm |
| D50 | 5.74 µm |
| D90 | 10.05 µm |

Ferner wird der viskosen Masse zumindest teilweise ein Grünkörperrest 24 zugeführt, der bei einem Strukturierungsprozess des noch zu beschreibenden Grünkörperprozesses anfällt. Dieser Grünkörperrest 24 wird mittels eines Rührers 36, der die viskose Masse 6 innerhalb eines Behälters 34 dispergiert, dort feinverteilt wieder aufgelöst.

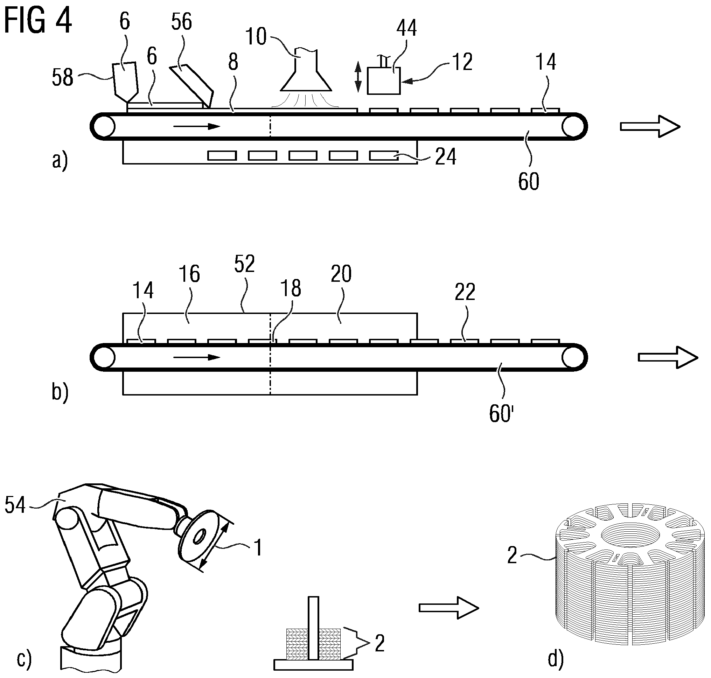

In den Figuren 4 bis 6 wird ein typischer Prozess für die Herstellung des Blechpaketes nach der Bereitstellung der viskosen Masse 6 beschrieben, wobei sich die Figuren 4 bis 6 insbesondere in ihrer Reihenfolge von verschiedenen Prozessschritten sowie in der Aufbringung der viskosen Masse und der Erzeugung eines flächigen Grünkörpers 8 unterscheiden.

In Figur 4a wird dargestellt, wie die viskose Masse 6 über eine Dosiervorrichtung 58 auf ein Förderband 60 aufgebracht wird und mittels eines Rakels 56 daraus eine gleichmäßig dicke Schicht in Form des flächigen Grünkörpers 8 erzeugt wird. Diese an sich noch recht viskose Schicht wird hier bereits als flächiger Grünkörper 8 bezeichnet. Dieser wird im weiteren Verlauf der kontinuierlichen Förderbewegung mittels eines hier schematisch dargestellten Trocknungsprozesses 10 zumindest oberflächlich angetrocknet, sodass eine bestimmte Festigkeit und Selbsttragefähigkeit des nun getrockneten flächigen Grünkörpers 8 entstehen. Im Weiteren erfolgt ein Strukturierungsprozess 12, wobei ein Stanzwerkzeug 44 in den flächigen Grünkörper 8 eingestanzt wird und somit ein Magnetblech-Grünkörper 14 erzeugt wird. Dabei werden die ausgestanzten Reste als Grünkörperreste 24 aufgefangen und wie zu Figur 3 beschrieben, einem Redispergierungsprozess wieder zugeführt.

Bei der Strukturierung des flächigen Grünkörpers zum Magnetblech-Grünkörper wird ein Formveränderungsfaktor mit berücksichtigt, bei dem berücksichtigt wird, dass durch einen folgenden Sinterprozess der Magnetblech-Grünkörper 14 einer Schrumpfung unterzogen wird. Somit ist die Kontur des Stanzwerkzeuges 44 so ausgestaltet, dass der Magnetblech-Grünkörper nach dem Sintern zum Magnetblech einem technisch festgelegten Endmaß des Magnetblechs 22 entspricht, sodass keine oder nur minimale Endbearbeitungen vorgenommen werden müssen.

In Figur 4b ist ein kombinierter Entbinderungsprozess im Sinterofen 52 abgebildet, der von einem Förderband 60' mit dem darauf befindlichen Magnetblechkörper 14 durchlaufen wird. In einer vorteilhaften Ausgestaltungsform gehen die Förderbänder 60 und 60' direkt oder indirekt (beispielsweise durch Rondelle oder seitliche translatorische Bewegungen) ineinander über, sodass keine Umschichtungsmaßnahmen des Magnetblech-Grünkörpers 14 erforderlich sind, was eine kontinuierliche Prozessführung und die Handhabung der Grünkörper 14 verbessert.

Der entbinderte Grünkörper 14 durchläuft somit den kombinierten Ofen 52, wobei in einem ersten Prozessschritt bei einer Temperatur von ca. 400°C ein Entbinderungsprozess 16 stattfindet. Bei diesen Temperaturbereichen wird das in der viskosen Masse 6 und somit auch im Grünkörper 14 enthaltene organische Bindemittel 28 thermisch zersetzt und es entweicht üblicherweise gasförmig aus den Poren des Grünkörpers 14.

Grundsätzlich besteht eine alternative Entbinderungsmöglichkeit in Form eines chemischen Zersetzens, was in diesem Prozessablaufschema nicht dargestellt ist.

In einem weiteren Teilprozess wird in dem kombinierten Ofen 52 entlang der Laufrichtung des Förderbandes 60' die Prozesstemperatur sukzessive erhöht, sodass für einen Sinterprozess 20 übliche Temperaturen von ca. 1200°C erreicht werden. Die Beförderung der zu sinternden Grünkörper erfolgt in einer Geschwindigkeit, dass sie der Sintertemperatur zwischen 1 bis 5 Stunden ausgesetzt sind und anschließend mit einem Gradienten von 300 K pro Stunde abgekühlt werden. Bei diesen Temperaturen schmelzen die Eisenpartikel des anorganischen Pulvers 26 noch nicht oder nur in sehr lokal begrenzten Bereichen auf. Allerdings finden bei diesen hohen Temperaturen knapp unterhalb des Schmelzpunktes der zu sinternden anorganischen Partikel 26 starke Diffusionsprozesse statt, die zu einer monolithischen Verfestigung der einzelnen Körner führen. Da es sich eben nicht um einen Schmelzprozess handelt, bleibt die vorher eingebrachte Kontur weitgehend bestehen, es kommt jedoch in den allermeisten Fällen bei der Sinterung zu einer Schrumpfung, da Poren zwischen den einzelnen Partikeln des anorganischen Pulvers 26 durch die Diffusionsprozesse verschwinden. Für diesen Schwindungsprozess, der bei einer ringförmigen Kontur, wie dies bei den Magnetblechen 22 der Fall ist, zu einer Radiusverringerung sowohl innen als auch außerhalb des Ringes führt, wird der bereits beschriebene Formveränderungsfaktor bei der Strukturierung 12 des Magnetblech-Grünkörpers 14 berücksichtigt. Nach dem Sinterprozess 20 verlassen die ehemals als Magnetblech-Grünkörper 14 bezeichneten Scheiben den kombinierten Ofen 52 als Magnetbleche 22. Diese Magnetbleche 22 weisen dabei eine sehr nahe Endkontur auf, sodass auf eine weitere mechanische Bearbeitung entweder verzichtet werden kann oder diese in nur sehr geringem Umfang nötig ist.

Im Weiteren werden gemäß Figur 4c automatisiert, beispielsweise durch einen Stapelroboter, wie er hier schematisch dargestellt ist, die einzelnen Magnetbleche 22 zu dem Magnetblechpaket 2 gestapelt. Hierauf folgt das Endprodukt dieses Prozesses, das in Figur 4d in Form des fertigen Magnetblechpaket 2 dargestellt ist, das weiter als Rotor einer elektrischen Maschine 4 einem Wickelprozess zugeführt wird.

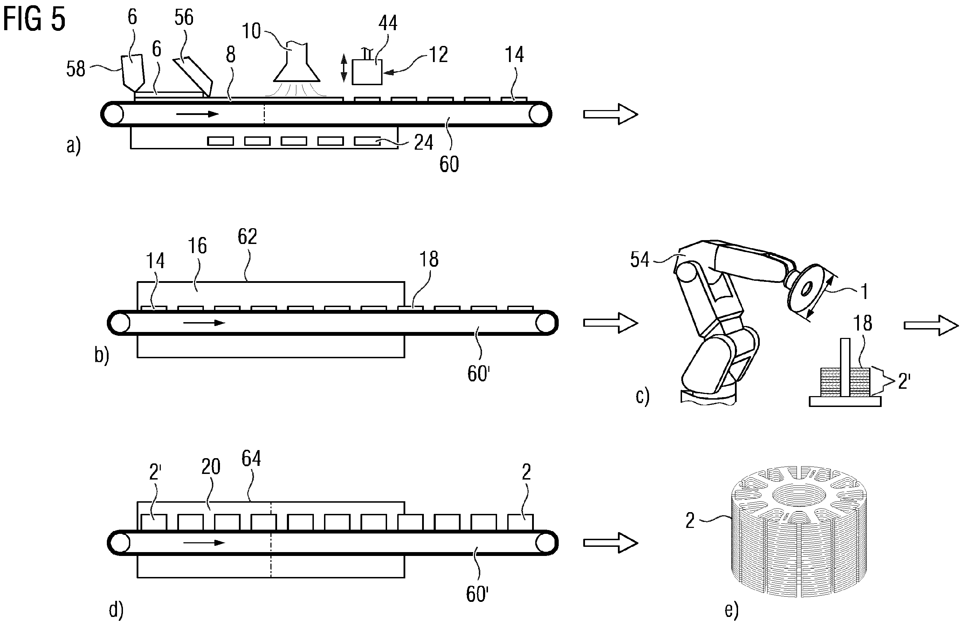

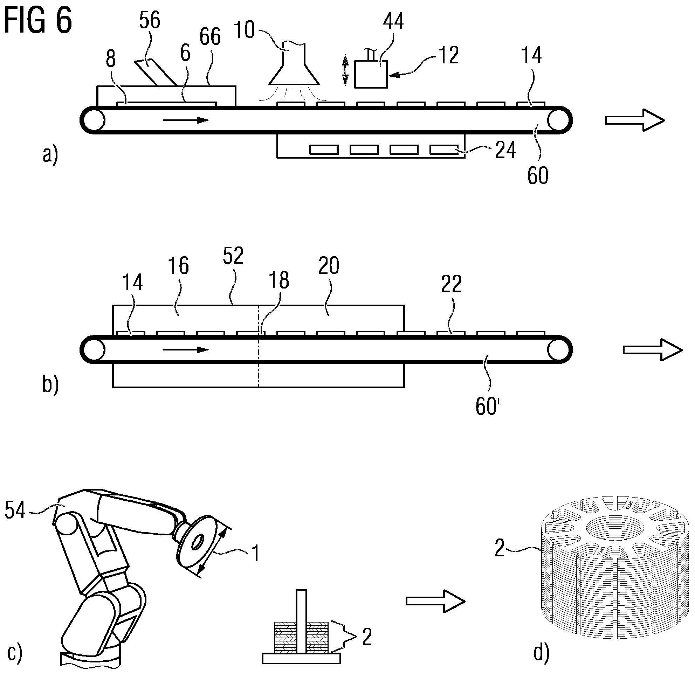

Ferner ist es während des Stapelns der Magnetbleche 22 zweckmäßig, dass zwischen die Magnetbleche 22 eine elektrisch isolierende Schicht eingebracht wird (was in den Figuren nicht explizit dargestellt ist). Dabei kann es sich beispielsweise um eine elektrisch isolierende Folie handeln. Es kann aber auch eine Schicht während des Stapelns aufgesprüht werden. Dieses Zwischenschritt ist insbesondere für die Figuren 4 und 6 zweckmäßig. Bei dem Prozess gemäß Figur 5 (siehe dort) ist zu gewährleisten, dass die elektrisch isolierende Schicht der Sintertemperatur thermisch standhält.

Ferner ist es zweckmäßig, nach dem Stapeln der Magnetbleche 22 eine Verdichtung vorzunehmen was hier ebenfalls nicht explizit dargestellt ist. Hierfür wäre insbesondere ein uniaxiales Pressen bei einem Druck in einem Bereich zwischen 0.5 MPa und 50 MPa zweckmäßig. Hierbei stellt sich eine plastische Verformung der einzelnen Magnetbleche 22 im Blechpaket 2 ein, wodurch die Packungsdichte des magnetisch wirksamen Materials noch einmal erhöht wird. Das uniaxiale Pressen stellt dabei eine technisch einfache Lösung dar, eine möglicherweise schonendere Verdichtung kann durch ein isostatische oder auch heißisostatisches Pressen, beispielsweise während oder nach dem Sinterprozess erfolgen.

In Figur 5 ist ein ähnlicher Prozess wie in Figur 4 dargestellt, der als Endprodukt in Figur 5e wieder das gleiche Blechpaket 2 aufweist. Die Figur 5a ist dabei identisch mit der Figur 4a. Im weiteren Prozessverlauf wird zunächst der Magnetblech-Grünkörper 14 in einem Entbinderungsprozess 16 wiederum in einem Entbinderungsofen 62 entbindert, wonach aus dem Entbinderungsofen 62 der entbinderte Grünkörper 18 auf dem Förderband 60' herausläuft. Vom Prinzip ähneln sich die Figuren 4b und 5b, wobei in der Figur 5b kein Sinterungsprozess vorgesehen ist.

In Figur 5c wird nun der entbinderte Grünkörper 18 mit einem vergleichbaren Stapelroboter 54 zu einem Blechpaket aus entbinderten Grünkörpern 18 aufgeschichtet. Auch hier kann gegebenenfalls wie oben beschrieben eine isolierende Schicht, beispielsweise eine Keramikschicht eingebracht werden, die den Sintertemperaturen standhält. Hierfür kann beispielsweise eine Aluminiumoxidschicht nasstechnisch aufgebracht werden. Dieses Blechpaket ist in diesem Fall mit dem Bezugszeichen 2' bezeichnet. In Figur 5d ist dargestellt, wie Blechpakete 2` in einem (entbinderten) Grünzustand in einen Sinterofen 64 geführt werden und dort im bereits gestapelten Zustand in dem Sinterprozess 20 zu dem Magnetblechpaket 2 gesintert werden. Auch dieser Prozess ist kontinuierlich ausgestaltet und findet mittels eines Durchlaufofens auf einem Förderband statt. Der Vorteil dieses Prozesses besteht darin, dass auf einem bereits vorgestapelten Blechpaket 2` ein möglicher Verzug in der Ebene des Magnetbleches 22 weniger stark ausgeprägt ist, sodass die Packungsdichte an magnetisch wirksamen Material im Magnetblechstapel 2 gemäß Figur 5 höher sein kann, als wenn einzelne Magnetbleche analog Figur 4 hergestellt werden. Der Vorteil des Prozesses gemäß Figur 4 gegenüber dem in Figur 5 besteht im Gegenzug darin, dass das Stapeln von fertig gesinterten Magnetblechen 22 vom Handling her weniger aufwändig ist und mittels des Stapelroboters 54 in der Regel mit weniger Ausschuss bewerkstelligt werden kann.

Zu Figur 5c ist noch anzumerken, dass gegebenenfalls der Strukturierungsprozess des flächigen Grünkörpers 8 so ausgestaltet ist, dass Hilfsstrukturen zum Handhaben des Magnetblech-Grünkörpers 14 stehen bleiben. Diese Hilfsstrukturen können insbesondere beim Stapeln oder sonstigen Verfahrensschritten, in denen der Grünkörper 14 umgesetzt wird, hilfreich sein. Diese Hilfsstrukturen, die hier nicht dargestellt sind, werden im späteren Verfahrensverlauf wieder entfernt.

In Figur 6 ist ebenfalls ein ähnlicher Prozessverlauf wie in Figur 4 angegeben, wobei sich die Figuren 6b und 4b gleichen. Auch die Figuren 6c und 6d sowie 4c und 4d sind dabei identisch. Lediglich in der Formgebung des flächigen Grünkörpers 8 gemäß Figur 6a besteht ein gewisser Unterschied. Die viskose Masse 6 ist dabei mit einer höheren Viskosität versehen als dies bei den vergleichbaren Massen 6 in den Figuren 4 und 5 der Fall ist. Aus diesem Grund wird diese viskose Masse 6 nicht durch ein Gieß- oder Ziehverfahren wie mit der Dosiervorrichtung 58 aufgebracht, sondern die nun pastenförmige viskose Masse 6 wird durch ein Rakel 56 durch ein Sieb gepresst, wobei das hier nicht zu erkennende Sieb von einer Schablone 66 gehalten wird. Von dem im Stand der Technik behandelten Siebdruckverfahren zur Herstellung von Magnetblechen unterscheidet sich die Figur 6 darin, dass auch hier kontinuierliche flächige Grünkörper 8, die gegebenenfalls ebenfalls kontinuierlich unterbrochen sind, gedruckt werden. Dieser Siebdruck hat keine formgebenden Eigenschaften für die Kontur des endgültigen Magnetbleches. Dies erfolgt wie in den anderen Verfahrensabbildungen gemäß Figuren 4 und 5 wiederum durch den Strukturierungsprozess 12, beispielsweise durch das Stanzwerkzeug 44.

Bisher wird in allen drei Figuren 4, 5 und 6 lediglich das Stanzwerkzeug 44 für den Strukturierungsprozess 12 beschrieben. Dabei ist das Stanzen grundsätzlich die bevorzugte Methode, da es prozessual gesehen kostengünstig und prozesssicher durchführbar ist. Bei bestimmten sehr hoch präzisen Anforderungen an die Kontur können jedoch auch andere, gegebenenfalls technisch aufwändigere Verfahren wie das Wasserstrahlschneiden oder das Lasern zweckmäßig sein.

Auch in Figur 6 wird der Grünkörperrest 24 aufgefangen und einer Redispergierung, vergleichbar zu Figur 3, zugeführt. Ein Vorteil des in Figur 6 beschriebenen Prozesses gegenüber den Prozessen in den Figuren 4 und 5 besteht darin, dass hier eine höherviskose Masse 6 verarbeitet wird. Diese weist bereits nach der ersten Formgebung einen höheren Feststoffanteil und damit eine höhere Standfestigkeit auf und erfordert je nach Zusammensetzung gegebenenfalls einen kürzeren oder weniger aufwändigen Trocknungsprozess 10 als dies bei flüssigeren, niedrigviskoseren Schlickern der Fall ist.

Allen drei beschriebenen Verfahrensalternativen gemäß den Figuren 4, 5 und 6, die wiederum lediglich exemplarisch gegenüber noch weiteren möglichen Verfahrensabläufen und auch Kombinationen aus den Figuren 4 bis 6 beschrieben sind, ist zu eigen, dass es sich um kontinuierliche Prozesse handelt, die eine hohe Durchsatzrate von Magnetblechen 22, aber auch von den Endprodukten, d.h. den Blechpaketen 2, erlauben. Gegenüber dem beschriebenen Siebdruckverfahren nach dem Stand der Technik kann hierbei mit einem geringeren technischen Aufwand eine höhere Stückzahl in der Endfertigung pro Zeiteinheit erzielt werden. Gegenüber den herkömmlichen Herstellungsverfahren für Magnetbleche ist es durch das beschriebene Verfahren vorteilhaft, dass der entstandene Abfall, der durch den Strukturierungsprozess 12 entsteht, mit minimalem Aufwand wieder der Prozesskette zugeführt werden kann, ohne dass dabei eine Verschlechterung des Ausgangsproduktes auftritt.

### Bezugszeichenliste

- 2: Blechpaket
- 4: elektrische Maschine
- 6: viskose Masse
- 8: flächiger Grünkörper
- 10: Trocknungsprozess
- 12: Strukturierungsprozess
- 14: Magnetblech-Grünkörper
- 16: Entbinderungsprozess
- 18: entbinderter Grünkörper
- 20: Sinterprozess
- 22: Magnetblech
- 24: Grünkörperreste
- 26: anorganisches Pulver
- 28: Bindemittel
- 30: flüssiges Trägermittel
- 32: Mischprozess
- 34: Behälter
- 36: Rührer
- 38: integrierter thermischer Prozess
- 40: Tape-Casting-Verfahren
- 42: Schablonendruckverfahren
- 44: Stanzwerkzeug
- 46: Gehäuse
- 48: Rotor
- 50: Stator
- 52: kombinierter Entbinderungs- und Sinterofen
- 54: Stapelroboter
- 56: Rakel
- 58: Dosiervorrichtung
- 60: Förderband
- 62: Entbinderungsofen
- 64: Sinterofen
- 66: Schablone

## Patentansprüche

1. Verfahren zur Herstellung eines Blechpaketes (2) einer elektrischen Maschine (4), umfassend folgende Schritte,
a) Herstellen einer viskosen Masse (6) durch Vermischen mindestens eines anorganischen Pulvers (26) mit mindestens einem organischen Bindemittel (28) und einem flüssigen Trägermittel (30),
b) flächiges Verteilen der viskosen Masse auf eine Dicke von weniger als 0,5 mm,
c) Ausbilden eines flächigen Grünkörpers (8) durch zumindest teilweises Entfernen des flüssigen Trägermittels mittels eines Trocknungsprozesses,
d) Durchführen eines Strukturierungsprozesses (12) zur Vereinzelung von Magnetblech-Grünkörpern (14) aus dem flächigen Grünkörper (8), wobei Grünkörperreste (24) zurückbleiben,
e) Entfernen des mindestens einen organischen Bindemittels aus dem Grünkörper,
f) Sintern des entbinderten Grünkörpers (18) zu einem Magnetblech (22),
g) Stapeln einer Vielzahl von Magnetblechen (22) zu einem Blechpaket (2),
h) Pulverisieren des Grünkörperrestes (24) und Versetzen des pulverisierten Grünkörperrestes (24) mit dem flüssigen Trägermittel (30) und
i) Wiederholen der Schritte a bis g mit der so redispergierten viskosen Masse (6).

2. Verfahren nach Anspruch 1, **dadurch gekennzeichnet, dass** das anorganische Pulver (26) Eisen oder eine Eisenlegierung umfasst.

3. Verfahren nach Anspruch 2, **dadurch gekennzeichnet, dass** das Eisen oder die Eisenlegierung weichmagnetische Eigenschaften aufweist.

4. Verfahren nach Anspruch 1 bis 3, **dadurch gekennzeichnet, dass** die maximale Partikelgröße des Pulvers (26) d₁₀₀ geringer als 100 µm ist.

5. Verfahren nach einem der vorhergehenden Ansprüche, **dadurch gekennzeichnet, dass** die Dicke des flächigen Grünkörpers (8) weniger als 300pm, bevorzugt weniger als 200 µm beträgt.

6. Verfahren nach einem der vorhergehenden Ansprüche, **dadurch gekennzeichnet, dass** die Dicke des flächigen Grünkörpers (8) mindestens 20 pm, bevorzugt mindestens 50 µm beträgt.

7. Verfahren nach einem der vorhergehenden Ansprüche, **dadurch gekennzeichnet, dass** das Entbindern und das Sintern des Grünkörpers in einem integrierten thermischen Prozess (38) erfolgt.

8. Verfahren nach einem der vorhergehenden Ansprüche, **dadurch gekennzeichnet, dass** ein Formveränderungsfaktor zwischen dem Magnetblech-Grünkörper (14) und dem Magnetblech (22) ermittelt wird, und der Strukturierungsprozess (12) so eingestellt wird, dass sich der Magnetblech-Grünkörper (14) um den Strukturierungsfaktor von einem festgelegten Endmaß des Magnetblechs (22) unterscheidet.

9. Verfahren nach einem der vorhergehenden Ansprüche, **dadurch gekennzeichnet, dass** das flächige Verteilen der viskosen Masse (6) mittels eines Schlickergussverfahrens, eines Tape-Casting-Verfahrens (40) oder eines Sieb- oder Schablonendruck-Verfahrens (42) erfolgt.

10. Verfahren nach einem der vorhergehenden Ansprüche, **dadurch gekennzeichnet, dass** der Strukturierungsprozess (12) mittels eines Stanzwerkzeuges (44) erfolgt.

11. Verfahren nach einem der vorhergehenden Ansprüche, **dadurch gekennzeichnet, dass** die Verfahrensschritte d) und e) in umgekehrter Reihenfolge erfolgen.

12. Verfahren nach einem der vorhergehenden Ansprüche, **dadurch gekennzeichnet, dass** die Verfahrensschritte f) und g) in umgekehrter Reihenfolge erfolgen.

13. Verfahren nach einem der vorhergehenden Ansprüche, **dadurch gekennzeichnet, dass** beim Stapeln zwischen zwei Magnetblechen (22) oder Magnetblechgrünkörpern (14) eine elektrisch isolierende Schicht angebracht wird.

14. Verfahren nach einem der vorhergehenden Ansprüche, **dadurch gekennzeichnet, dass** beim Stapeln zwischen zwei Magnetblechen (22) oder Magnetblechgrünkörpern (14) eine Adhäsionsschicht aufgebracht wird.

15. Verfahren nach einem der vorhergehenden Ansprüche, **dadurch gekennzeichnet, dass** nach dem Stapeln der Magnetbleche (22) oder Magnetblechgrünkörper (14) eine Verfestigung des Magnetblech-Stapels (2) durch ein Pressen mit einem Druck der größer oder gleich 0,5 MPa und maximal 50 MPa liegt, erfolgt.
